# EUROPEAN PATENT SPECIFICATION

(11) **EP 3 070 796 B1**
(45) Date of publication and mention of the grant of the patent: **08.11.2017**
(21) Application number: 15159514.7
(22) Date of filing: 17.03.2015
(51) Int. Cl.: H02B 1/30, H02B 1/01

(54) **JOINING-ELEMENT FOR MECHANICALLY JOINING SWITCHGEAR FRAMES**
VERBINDUNGSELEMENT ZUM MECHANISCHEN VERBINDEN VON SCHALTANLAGENRAHMEN
ÉLÉMENT DE LIAISON POUR LA LIAISON DE CHÂSSIS À COMMUTATION

(43) Date of publication of application: 21.09.2016
(73) Proprietor: ABB S.p.A., 20124 Milano (IT)
(72) Inventor: Frattaruolo, Massimo, 20837 Veduggio con Colzano (MB) (IT); Proserpio, Simone Angelo, 22039 Valbrona (CO) (IT)
(74) Representative: De Santis, Giovanni

(56) References cited:
- EP-A1- 0 538 540
- DE-U1-202012 102 513
- FR-A1- 2 871 957
- JP-A- S63 202 207

## Description

The present invention relates to a joining-element for mechanically joining frames of switchgears, especially low voltage switchgears, to one other in an easy, precise and quick manner.

For the purposes of the present application, the term switchgear is equivalent to the terms panel or cabinet or switchboard.

It is often required to mutually mechanically connect more switchgear-frames so as to obtain a modular group of a desired number of side-by-side arranged switchgears. For achieving such a mutual mechanical connection of frames it is known the use of joining-devices. A first type of joining-device comprises a profiled bracket-plate which is shaped for transversely embracing two parallel and vertical uprights of two respective frames arranged adjacent to one other. Fixing holes are obtained on the bracket-plate for receiving fixing-screws which are intended to engage with the two adjacent uprights. This type of joining bracket-element is designed to be placed on the internal sides of the uprights, i.e. must be collocated in an internal region of the compartment of switchgear and this sometimes involves some difficulties during the assembly operations. For example, in presence of segregations within the switchgears, it may be required to provide the segregation-panels with suitable cut-out or breakable zones to be removed for enabling the internal fixing of the bracket-element to the frames. It is also to be taken into account another aspect that makes the assembly operations even more difficult. In fact, in general, each single switchgear reaches the installation-site in a finished configuration, i.e. it already includes all the electrical/electronic components and is in a ready-to-operate-condition. It is therefore important to carry out the operations of mutual joining of the frames *in situ* very carefully in order to prevent any damages to such electrical/electronic components in particular when access to the compartments is necessary for fixing the joining bracket-element - through the screws - to the internal sides of the frames.

A further type of joining-device is also known, which is configured for being mounted from the outside of the frames through fixing-screws. These known devices comprise two mating elements, each to be fixed to a respective frame, having complementary shapes that can be geometrically coupled together in order to connect two frames. However, the shapes of these joining-devices are rather complicated and demanding to produce. Furthermore, these devices not all the time enable to easily and quickly achieve a mutual perfect alignment and precise positioning of the frames. Again, the need for using separated screws for fixing each device to the respective uprights, makes the connecting-operations rather uncomfortable, wearisome and time-consuming. JP S63 202 207 A, DE 20 2012 102 513 U and FR 2 871 957 disclose various prior art joint-elements, EP 0 538 540 A1 discloses the pre-amble of claim 1. It would be desirable to overcome all the above mentioned drawbacks, by providing a very versatile joining-element, structurally simple to manufacture, which in general simplifies and speeds up procedures for joining two or more switchgears-frames and enables high accuracy and precision in the connection to be achieved effortlessly.

This is achieved by a joining-element as defined in the appended claims and described hereinafter in details. According to the invention, there is provided a joining-element for mechanically joining switchgear-frames to one other, comprising:
- a coupling-base-part having a resting-surface suitable for resting on, and coupling with a profile-rod of a first switchgear-frame,
- a locking-mating-part protruding from said coupling-base-part and configured for mating with a further locking-mating-part of a further joining-element connectable to a respective profile-rod of a second switchgear-frame,
- said locking-mating-part having a through-opening extending along an insertion-axis and suitable for cooperating with a further through-opening of said further locking-mating-part for receiving a locking-pin-element parallely to longitudinal-axes of said profile-rods to reciprocally lock said locking-mating-part and said further locking-mating-part.

The locking-mating-part comprises a first aligning-surface-portion tilted with respect to said insertion-axis and configured for enabling, upon a reciprocal approaching-movement of said joining-element and said further joining-element, achievement of a mutual alignment position of said switchgear-frames according to a first direction parallel to said longitudinal axes, and achievement of a desired relative side position according to a second direction orthogonal to said longitudinal axes and to said resting-surface, on said locking-mating-part and coupling-base-part there being included a second aligning-surface-portion parallel to said insertion-axis, sloping relative to said resting-surface, and configured for ensuring a reciprocal alignment of said switchgear-frames according to a third direction orthogonal to said insertion-axis and parallel to said resting-surface.

The present disclosure also encompasses a kit comprising a pair of such joining-elements, suitable to be connected on respective switchgear-frames and a cylindrical oblong locking-pin-element for being inserted in the axially aligned through-openings of said joining-elements in the coupling-configuration.

The present disclosure also encompasses a switchgear comprising a frame and at least one joining-element as the joining-element defined in the annexed claims and discussed in the following description.

Characteristics and advantages of the present disclosure will result from the description and from claims.

The present disclosure can be better understood and implemented with reference to the attached drawings that illustrate an embodiment thereof by way of non-limiting example, in which:

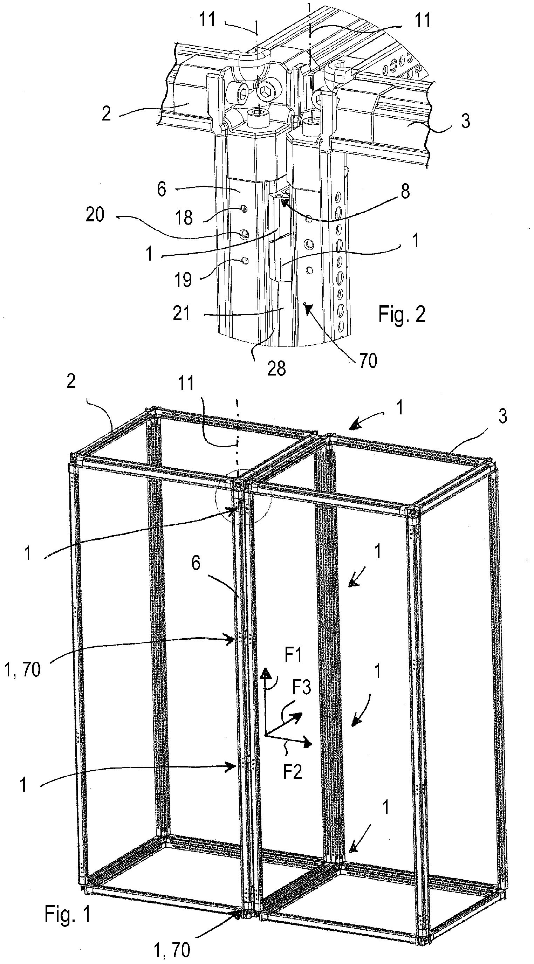

Figure 1 shows two switchgear-frames placed side by side and mutually connected through a plurality of joining-elements of the invention;
Figure 2 is an enlarged detail of Figure 1 showing a pair of mated joining-elements mutually connecting two switchgear-frames;
Figures 3 and 4 show a pair of joining-elements in a mated configuration and in a separated configuration respectively;
Figures 5 to 7 are different views of the joining-device;
Figure 8 is a section-view taken along the plane VIII-VIII in Figure 6;
Figure 9 and 10 are top and bottom views respectively of the joining-element;
Figure 11 is a section-view taken along the plane XI-XI in Figure 10;
Figure 12 is an enlarged detail of figure 10, showing a through-opening and a part of a flare-inviting-surface obtained in a locking-mating-part of the joining-element;
Figure 13 is a further view of the joining-element;
Figure 14 is a top-view of the mated joining-elements in Figure 3;
Figure 15 is a section-view taken along the plane XV-XV in Figure 14;
Figure 16 shows a pair of partially aligned joining-elements together with a locking-pin-element;
Figures 17 and 18 are a perspective view and a front view respectively of a joining-element in a first step of mounting on a profile-rod;
Figure 19 show the joining-element placed in a self-standing position on the profile-rod;
Figures 20 and 21 are a perspective view and a front view respectively of the joining-element in a firmly secured position on the profile-rod;
Figure 22 shows a fragmentary enlarged view of part of a switchgear-frame with some joining-element coupled therewith;
Figure 23 is a fragmentary top-view showing two joining-elements attached to a first switchgear-frame on the left and two further joining-elements attached to a second switchgear-frame on the right and arranged in a misaligned position relative to the joining-elements on the left;
Figure 24 is analogous to Figure 23 but shows the pairs of joining-elements in a partially aligned position;
Figure 25 shows the pairs of joining-elements mutually arranged in a completely aligned position;

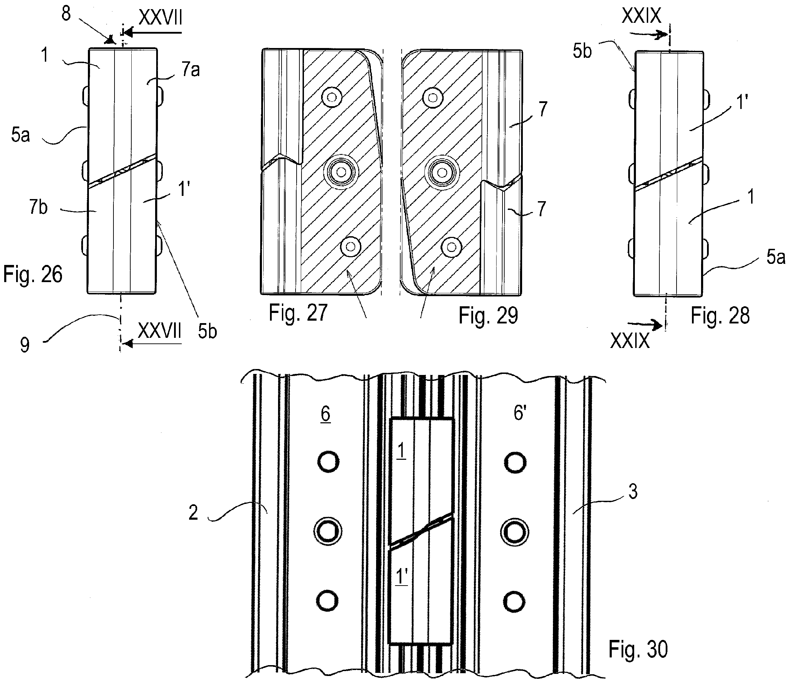

Figure 26 and 28 show respectively a pair of mutually mated joining-elements in a position as arranged on the front uprights of the frames and a pair of mutually mated joining-elements in a position as arranged on the rear uprights of the frames;
Figure 27 and 29 are section-views taken along the plane XXVII-XXVII in Figure 26 and along the plane XXIX-XXIX in Figure 28 respectively;
Figure 30 shows two joining-elements connected to one other and coupled to respective front uprights.

It should be noted that in the detailed description that follows, in order to clearly and concisely disclose the present invention, the drawings may not necessarily be to scale and certain features of the disclosure may be shown in somewhat schematic form.

With reference to the attached Figures, a joining-element 1 is described for mechanically joining a desired number of switchgear-frames to one other. In the figures, for example, a first switchgear-frame 2 is connected to a second switchgear-frame 3 through a desired number of joining-elements 1, in this case six pair of joining-elements, where six joining-elements are applied to the first switchgear-frame 2 and six further joining-elements are applied to the second switchgear-frame 3. However, any desired number of pairs of joining-elements 1 distributed at suitably chosen intervals can be adopted according to specific requirements or needs.

As detailed better in the following, the joining-element 1 has such a shape as to be able, in use, to mate with a further identical joining-element 1' in a complementary manner. More precisely, the two joining-elements 1, one suitably rotated relatively to the other, mutually fit in a compact geometrical configuration for closely joining two switchgear-frames 2, 3. It should be noted that, for sake of clarity, only the frames 2, 3 with no internal components of the switchgears are shown. Nevertheless, the joining-elements 1, advantageously, can be applied to the switchgears being in a entirely set-up configuration including inside all the necessary electrical/electronic components, i.e. in a ready-to-operate condition, and there is no need at all for temporarily removing internal components in order to mount the joining-elements 1. This is possible owing to the geometrical configuration making the joining-elements 1 able to be easily and quickly coupled from the outside to the frames. No access in the internal compartments of the switchgears is therefore required for establishing the mechanical connection of the frames.

Reference is made in the following to switchgear-frames 2, 3 which are defined by mutually interconnected vertical and horizontal profile rods 6 (i.e. vertical uprights and horizontal crosspieces). Each profile-rod 6 has a two-surface-levels configuration, i.e. an internal double stepped surface, intended to face the internal compartments of the switchgear, and two mutually orthogonal side-walls 21 facing the outside with respect to such compartments. On each side-wall 21 there is obtained a plurality of series of openings distributed along the respective longitudinal axes 11. In particular, each series of openings comprises two longitudinally spaced securing-openings 18, 19 and a holding-opening 20 interposed therebetween, whose function will be clear later on.

The joining-element 1 comprises a coupling-base-part 4 having a resting-surface 5 suitable for resting on, and coupling with a respective profile-rod 6. The joining-element 1 includes a locking-mating-part 7 protruding from the coupling-base-part 4. The locking-mating-part 7 is configured for mating with a further locking-mating-part of a further joining-element 1' connectable to a respective profile-rod 6' of the second switchgear-frame 3.

In the locking-mating-part 7 there is provided a through-opening 8 extending along an insertion-axis 9 and suitable for cooperating with a further through-opening of a further identical joining-element 1', for receiving a locking-pin-element 10 parallely to the longitudinal-axes 11 of the profile-rods 6, 6'. In this way, the locking-mating-part 7a of the joining-element 1 and the further locking-mating-part 7b of the further joining-element 1' are reciprocally locked by the locking-pin-element 10. The locking-pin-element 10 has just a simple oblong-cylindrical shape, like a nail-shape, therefore has a structural configuration which is very simplified and cheap to produce. Along an internal surface 39 delimiting the through-opening 8 there are distributed longitudinal retaining-ribs 40 which protrude for contacting through mechanical interference the locking-pin-element 10 in order to firmly hold it and prevent any backlash.

The coupling-base-part 4 comprises a thinner-portion 35, extending from a first end zone 33 to near a middle zone 34 of the coupling-base-part 4, and a thicker-portion 36 extending from the middle zone 34 to a second end zone 37 opposite to the above-mentioned first end zone 33. The thinner-portion 35 and the thicker-portion 36 define, at an opposite side with respect to the resting-surface (5), a dip-zone and a rise-zone, shaped for matching with a further rise-zone and further dip-zone respectively of the further joining-element 1'.

The coupling-base-part 4 and the locking-mating-part 7 are integral with one other so as to define a single-piece-block-element. Such a single-piece-block-element is obtained by metal pressure die casting process. In particular, the joining-element 1 is made of a metal alloy comprising a base metal of zinc and alloying elements of aluminium, magnesium, and copper.

The coupling-base-part 4 comprises coupling-protrusion-means 15, 16, 17 configured for achieving a connection of a screwless-type of the joining-element 1 to the profile-rod 6. These coupling-protrusion-means 15, 16, 17 protrude from the resting-surface 5 and they are configured for engaging with the openings 18, 19, 20 of the profile-rod 6 so as to achieve, preliminarily a self-standing position for the joining-element 1, and subsequently to firmly secure the joining-element 1 to the switchgear-frame 2. Advantageously, differently from the prior-art devices, there is no need for screws, or threaded pins o other equivalent separated fixing-elements for fixing each joining-element 1 to the respective profile-rod 6. This facilitates and speeds up the connecting-operations.

The coupling-protrusion-means comprise two spaced locking-pins 15, 16, suitable for engaging with respective securing-openings 18, 19 of the profile-rod 6. The coupling-protrusion-means further comprise a pre-positioning-center-pin 17, interposed between the two locking-pins 15, 16 and projecting, in particular orthogonally, from the resting-surface 5 along a positioning-axis 22. The pre-positioning-center-pin 17 is suitable for pivotally engaging with one holding-opening 20 interposed between two securing-openings 18, 19 of the profile-rod 6.

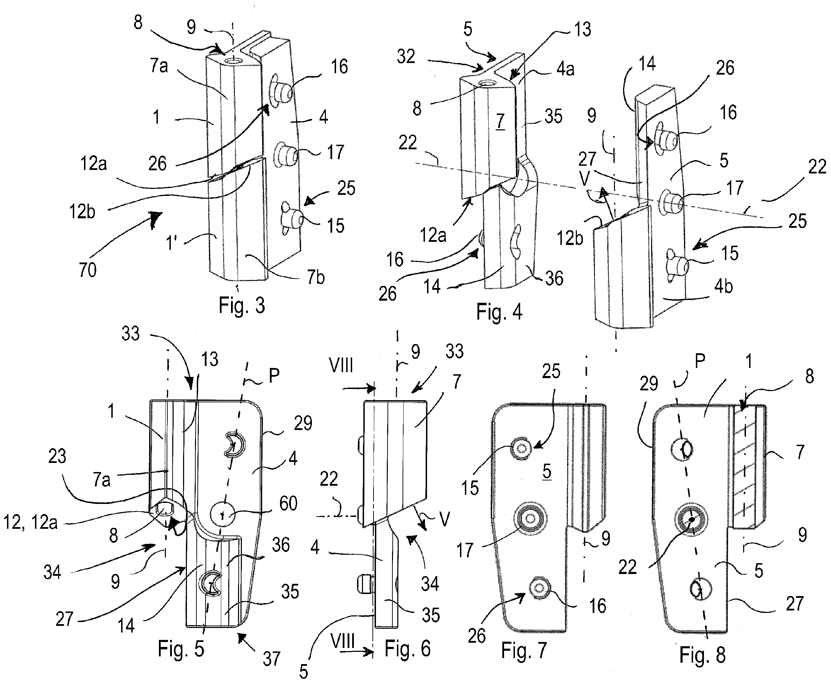

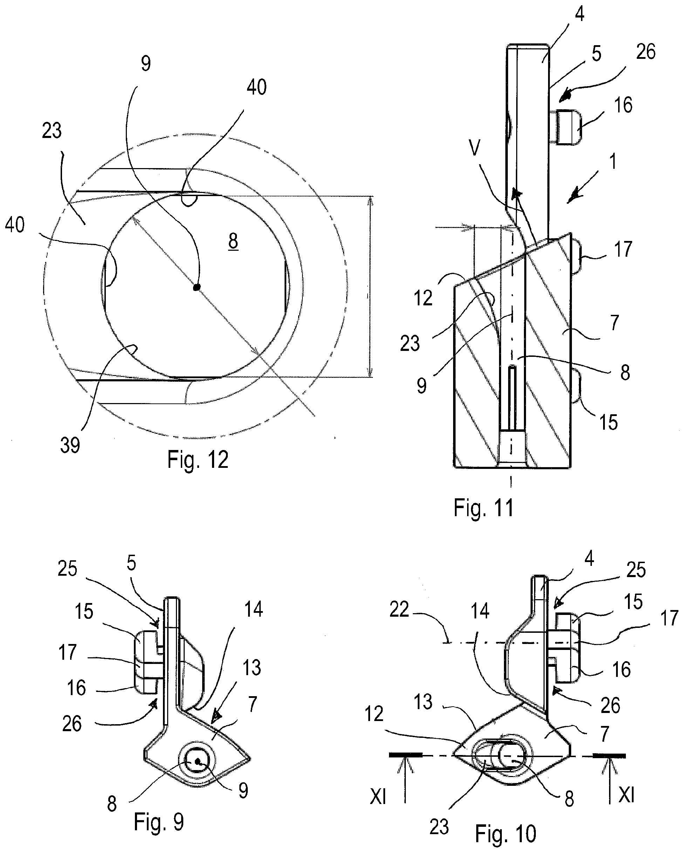

In particular, the axes of the locking-pins 15, 16 and the axis 22 of the pre-positioning-center-pin 17 are mutually parallel and lie on a common plane P. The common plane P is orthogonal to the resting-surface 5 and tilted with respect to the insertion-axis 9, as can be seen in Figures 5 and 9. In other words, the locking-pins 15, 16 and the pre-positioning-center-pin 17 are distributed on a plane that is not arranged parallel to longitudinal extent of the coupling-base-part 4, but is tilted by a suitable angle.

The locking-pins 15, 16 have cut-out-zones 25 and 26 respectively, for hooking on edge-zones of the securing-openings 18, 19 and for embracing the thickness of the side-wall 21 so as to firmly restrain the coupling-base-part 4 on said profile-rod 6. The shape of the cut-out-zones 25, 26, in particular their thickness/width can be suitably defined for achieving, during coupling, a desired mechanical interference with the edge-zones of the side-wall 21 for establishing a more firm coupling and thus a self-standing position for the joining-element 1, without the aid of external fastenings.

The two cut-out-zones 25, 26 are oriented according to respective opposite directions, these directions being transversely arranged with respect to the positioning-axis 22 of the pre-positioning-center-pin 17. In particular, the cut-out-zones 25, 26 are placed so as to face opposite sides with respect to above mentioned common plane P. The presence of the cut-out-zones 25, 26 pointing to opposite directions, the spatial arrangement of the locking-pins 15, 16 and pre-positioning-center-pin 17, and the tilt-angle of their lying plane P are such that, upon a locking-rotation of the coupling-base-part 4 around the positioning-axis 22, the cut-out-zones 25, 26 engage simultaneously each with a corresponding edge-zone of the openings 18, 19 thus blocking the coupling-base-part 4 on the profile-rod 6, and the coupling-base-part 4 reaches a position in which is longitudinally arranged parallel to the axis 11 of the profile-rod 6.

It should be noted that the profiled-rod 6 referred to in this description has each side-wall 21 delimited by a stepped-surface 31. Accordingly, taking into account of such a geometrical configuration, the shape of coupling-base-part 4 of the joining-element 1 is so adapted as to avoid a mechanical interference during assembly on the respective profile-rod 6, as explained in the following. The coupling-base-part 4 comprises a front side-edge 27 intended to be arranged near and parallel to a more external corner 28 of the profile-rod 6 and to face the outside of the switchgear-frame 2. The coupling-base-part 4 further comprises a rear side-edge 29, 30, opposite the front side-edge 27, intended be placed closely to the above-mentioned stepped-surface 31 of the profile-rod 6. The rear side-edge has a first trait 29, parallel to the front-side-edge 27, and a second trait 30 which is tilted with respect to the first trait 29. In particular, the second trait 30 is arranged parallel to the above mentioned common-plane P thus making possible to avoid a mechanical-interference with the profile-rod 6 and to enable mounting of the coupling-base part 4 thereon.

Owing to the specific geometrical and structural configuration of the coupling-base-part 4, included the coupling-protrusion-means 15, 16, 17, the joining-element 1 can be mounted on the side-wall 21 only in one possible correct spatial orientation relative to the profile-rod 6, meaning that, advantageously, the joining element 1 so configured enables to avoid errors in the mounting-operation. In other words, the joining-element 1 proves to be a very versatile and reliable solution for achieving an error-free mechanical connection. The coupling-base-part 4 and the locking-mating-part 7 are configured so that, in use, the joining-element 1 mates with a further identical joining-element 1' rotated, with respect to it by 180° about an horizontal axis and by 180° about a vertical axis, with the locking-mating-part 7a of the first joining-element 1 aligning with the further locking-mating-part 7b of the second joining-element 1' along the insertion-axis 9, and with the respective coupling-base-part 4a and 4b facing to, and being matched against, one other.

On a side of the coupling-base-part 4 opposite the resting-surface 5 there is obtained a blind pilot hole 60 or a centering-notch 60, having substantially the same diameter as the pre-positioning-center-pin 17 and axially aligned with the latter.

This bling pilot hole 60 or centering-notch 60 is provided to facilitate an optional drilling-step so as to remove the pre-positioning-center-pin and obtain a calibrated through-hole suitable for receiving an auxiliary fixing-screw engaging with the holding-opening 20 of the profile-rod 6.

In particular, this blind pilot hole 60 may be used, if desired, as a guide for easily and quickly obtaining in the coupling-base-part 4 a calibrated through-hole for receiving a screw-element in order to provide an auxiliary fixing of screw-type in addition to the already provided connection of screwless-type above described. This feature may therefore be exploited optionally, since the coupling-protrusion-means 15, 16, 17, on its own, already prove to be highly effective in keeping the joining-element 1 safely and reliably coupled with the profile-rod 6. In fact, once the two switchgear-frames 2 and 3 are mutually joined, and locked through insertion of the locking-pin element 10, there is no possibility for the joining-elements 1, 1' to come off.

However, in some circumstances, the above-mentioned auxiliary fixing turns out to be useful. It may be desired to associate the joining-element 1 to the respective switchgear-frame, for example in a tamper-proof manner or for example for having a more stable position during transport of single switchgear-frames to the installation site. For a tamper-proof fixation a fixing-screw having a specially shaped head, may be used in connection with such optional through-hole.

Once the joining-element 1 is in the self-standing-position on the profile-rod 6, the installer may just point a suitable pin-drill onto the blind pilot hole 60 and perforate the latter up to the pre-positioning-center-pin 17. The pre-positioning-center-pin 17, initially engaged with the holding-opening 20, is caused by the drilling operation to get separated and to fall within the hollow profile-rod 6, thus leaving room for the insertion of a fixing-screw. In this way, such a fixing-screw may be inserted in the just formed through-hole and engages with the holding-opening 20 which has been left free from the pre-positioning-center-pin 17.

A more detailed description of the locking-mating-part 7 follows.

The locking-mating-part 7 protrudes from a peripheral side zone 32 of said coupling-base-part 4. When the joining-element 1 is in an operative mounting position on the respective profile-rod 6, the locking-mating-part 7 is arranged more externally than the coupling-base-part 4 and is easily accessible from the outside thus making an insertion of the locking-pin element 10 in the through-opening 8 very easy, while also enabling a closer mutual side-by-side position of the switchgear-frames 2, 3.

The locking-mating-part 7 longitudinally extends from the first end zone 33 to near the middle zone 34 of the coupling-base-part 4 and alongside the thinner-portion 35. The locking-mating-part 7 is staggered with respect to a longitudinal median line of the coupling-base-part 4 for resulting, in use, externally placed relative to the coupling-base-part 4, i.e. easily accessed to from the outside.

The locking-mating-part 7 comprises a first aligning-surface-portion 12, 23 tilted with respect to the insertion-axis 9 of the through-opening 8. The first aligning-surface-portion 12, 23 is configured for enabling, upon a reciprocal approaching-movement of the joining-element 1 and the further joining-element 1', achievement of a mutual alignment position of the two switchgear-frames 2, 3 according to a first direction F1 parallel to the longitudinal axes 11 of the profile rods 6, 6' and also achievement of a desired relative side position according to a second direction F2 orthogonal to the longitudinal axes 11 and to the resting-surface 5.

As can be clearly seen in Figures, in particular Figures 6, 11, 13, 16, the first aligning-surface-portion 12, 23 comprises an external slope-surface 12, for going in a sliding way into contact with the further locking-mating part 7b of the further joining-element 1'.

The first aligning-surface-portion 12, 23 further comprises a flare-inviting-surface 23 for promoting insertion of the locking-pin-element 10 within the through-opening 8 and finely adjusting the relative position of the matched joining-elements 1, 1' along the above-mentioned second direction F2. As clearly shown in Figures 6, 11, 13, the external slope-surface 12 has an inclination such that a vector V starting orthogonally therefrom points an opposite side with respect to the resting-surface 5. This inclination has the technical effect of enabling at first a contact of the of two joining-elements 1, 1' during mutual approaching and subsequently a relative sliding contact up to the final relative correct position. The flare-inviting-surface 23 starts from the external slope-surface 12 and extends inside the locking-mating-part 7 for defining at an end of the through-opening 8 an enlarged-flared-part for guiding and facilitating insertion of said locking-pin-element 10. Owing to the presence of the flare-inviting-surface 23, it is not necessary to have the two through-openings 8 of the respective joining-elements 1, 1' perfectly reciprocally aligned to enable a full insertion of the locking-pin-element 10. The flare-inviting-surface 23 therefore facilitates the achievement of a correct relative position of the joining-elements 1, 1' in the second direction F2.

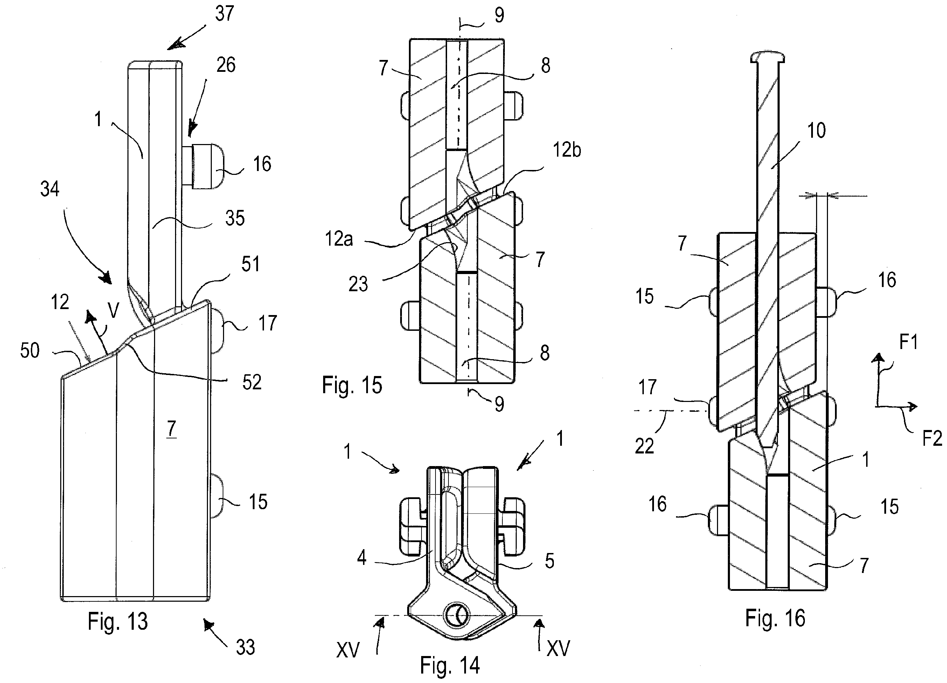

According to a first version, the slope-surface 12 is a flat surface which totally extends on a single tilted plane. According to a further version, better shown in Figure 13, the slope-surface 12 is subdivided into a lower surface-zone 50 and a higher surface-zone 51 which are joined by a ramp-fillet 52. The lower surface-zone 50 is farther from the resting-surface 5 than the higher surface-zone 51. The lower surface-zone 50 and the higher surface-zone 51 lie on respective planes which are mutually parallel and spaced from one other. These lower 50 and higher 51 surfaces-zones are adapted for avoiding seizure between the mutually approaching locking-mating-parts 7a, 7b and ensuring a closer positioning and precise contact of the joining-element 1 with the further joining-element 1'.

The joining-element 1 comprises a second aligning-surface-portion 13, 14 configured for ensuring a reciprocal alignment of the switchgear-frames 2, 3 according to a third direction F3 orthogonal to the insertion-axis 9 and parallel to the resting-surface 5. The second aligning-surface-portion 13, 14 is obtained on the locking-mating-part 7 and on the coupling-base-part 4. The second aligning-surface-portion 13, 14 is parallel to the insertion-axis 9 and sloping relative to the resting-surface 5.

The second aligning-surface-portion comprises a first deviating surface 13 provided on the locking-mating-part 7 on a side thereof intended, in use, to face the second switchgear-frame 3. The first deviating surface 13 merges with the coupling-base-part 4 according to an obtuse angle. The second aligning-surface-portion comprises a second deviating surface 14 provided along a longitudinal edge-zone of the coupling-base-part 4 at the same side as the locking-mating-part 7. The first deviating surface 13 is adapted for contacting in a sliding way a second deviating surface 14 of the further joining-element 1' and vice-versa.

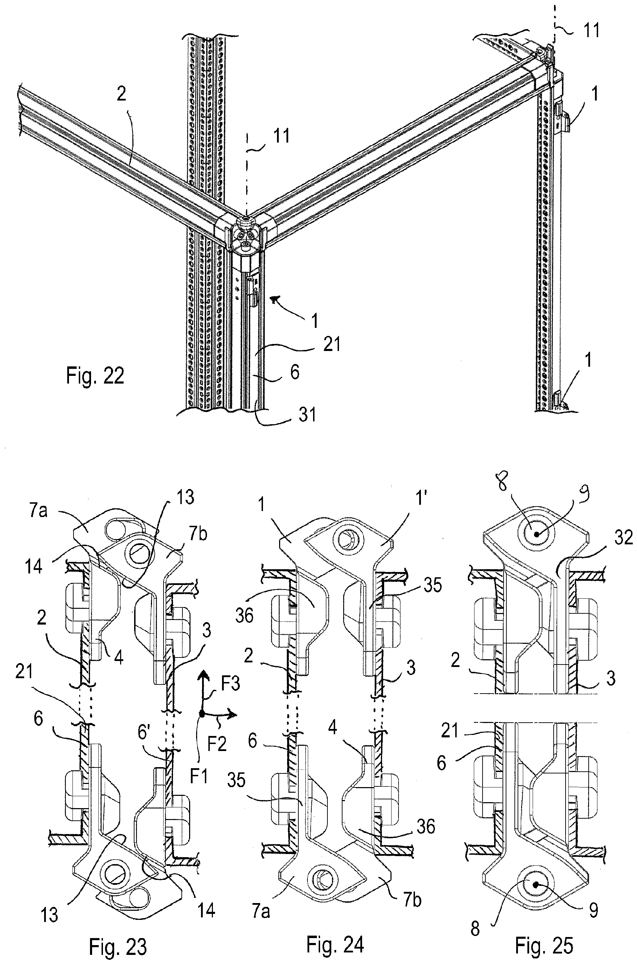

In other words, as schematically shown in Figure 23, when the two switchgear-frames 2 and 3 are mutually disaligned according to the F3 direction, i.e. in the depth direction of the switchgears, the mutual sliding contact of the first 13 and second 14 deviating surfaces 14 help to reach the relative correct position of the two frames 2 and 3 along the F3 direction.

In the following it is briefly described how to couple the joining-elements 1, 1' to the respective switchgear-frames 2, 3 and how the latters are mutually joined.

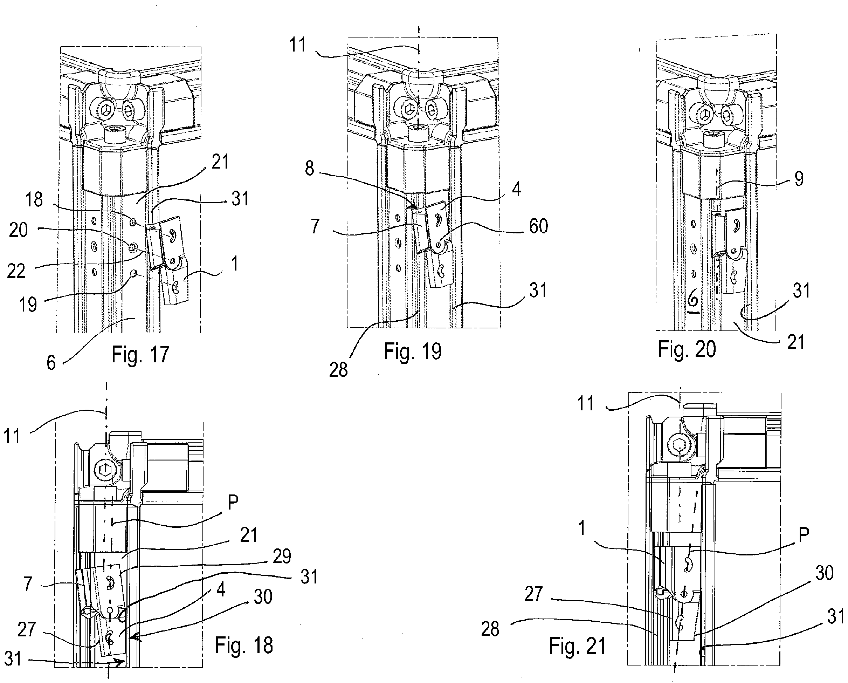

With reference to Figures 17 to 21, firstly, each of the joining elements 1, 1' to be mounted to the frames 2, 3, is applied to the respective side-wall 21 of the profile-rod 6. In order to insert the coupling-protrusion-means 15, 16, 17 in the respective openings 18, 19, 20, the coupling-base part 4 has to be initially tilted with respect to the longitudinal axis 11, as clearly shown in Figure 18 where the second trait 30 of the rear side edge is arranged parallel to the stepped surface 31. Once the coupling-protrusion-means 15, 16, 17 have entered the respective openings 18, 19, 20, the joining-element 1 can be rotated clockwise thus arranging the first trait 29 of rear-side edge in a parallel position to the stepped-surface 31 and making the cut-out zones 25 and 26 of the locking-pins 15, 16 to firmly engage with the respective edge-zones of the securing-openings 18, 19.

The joining-element 1 is thus autonomously anchored to the profile-rod 6. If desired, the installer may optionally drill the blind pilot hole or centering-notch 60 to proceed with the insertion of an auxiliary fixing-screw.

Owing to the advantageous geometrical shape of the joining element 1, there is no risk of coupling a joining-element 1 in a non-correct position, since only one possible correct spatial orientation thereof relative to the profile-rod 6 can be achieved, owing to the particular shape of the coupling-base-part 4 and the coupling-protrusion-means 15, 16, 17 which make possible a easy and quick connection, in a safe and error-free way.

This means that the joining elements 1 to be mounted on a front left profile-rod 6 will be oriented with the locking mating parts 4 at an higher position and the slope-surfaces 12 facing downwards, whereas the joining elements 1' to be mounted on the front right profile-rod 6' will be oriented with the locking mating parts 4 at a lower position and the slope-surfaces 12 facing upwards. In other words, for each kit, i.e. pair of joining-elements 1, 1', the two joining-elements match in a coupling-configuration 70 in which are turned over, one relative to the other, by 180° around a vertical axis and by 180° around a horizontal axis and by 180° around a vertical axis.

The same applies, *mutatis mutandis,* in a reversed way, for the rear right and left profile-rods.

It should be noted that the joining elements 1 can be mounted not only on vertical profile-rods 6, i.e. the uprights, but also on horizontal profile-rods 6, i.e. the crosspieces of the frames 2, 3.

Once all the joining-elements 1, 1' have been coupled to the respective profile-rods 6, 6', the frames 2 and 3 can be approached to one other. If the frames 2 and 3 are misaligned along the third direction F3, the first 13 and second 14 deviating surfaces interact in a sliding way for adjusting the relative position.

For example, the first 13 and second 14 deviating surfaces enable the frames 2 and 3 to correct a possible relative misalignment position shown in Figure 23. As the frames 2 and 3 further approach to one other, the relative sliding contact between the slope-surfaces 12a, 12b of the respective joining-elements 1, 1', causes a relative alignment of the frames 2 and 3 along the F1 direction. In other words, the frames 2 and 3 are obliged to reach both the same quote along the F1 direction. When a frame is pushed by an installer against the other frame it's not necessary to perfectly reach the definitive relative position, and even a partial alignment of the through-openings 8 is sufficient: in fact, by subsequently inserting the locking-pin-element 10 which interacts with the flare-inviting-surface 23, the definitive precise position of the two mating joining-elements 1, 1', and thus of the two frames 2, 3, is successfully easily achieved.

It is evident from the above description and figures that the joining-element 1 according to the invention fully achieves the intended aims of providing a technical solution for the quick, easy, cheap and versatile joining of switchgear-frames. Evidently, the joining-element 1 in general facilitates the assembly procedures which are simplified and accelerated with respect to the more time-consuming prior-art solutions.

In particular, owing to the first aligning-surface-portion 12, 23 and to the second aligning-surface-portion 13, 14, the assembly-operations of an installer-operator are noticeably facilitated and sped-up because a precise alignment in the tree spatial dimensions are immediately and easily achieved. Furthermore, the coupling-configuration of screw-less type achieved by the joining-element 1 owing to the integrated coupling-protrusion-means 15, 16, 17, proves to be a very comfortable technical solution for easily and rapidly joining the switchgears-frames.

Still further, other advantages, over the prior art devices, derive from the fact that each joining-kit comprises two identically shaped joining-elements 1 to be mutually mated. In fact, differently from prior-art devices having distinct mating male and female elements (evidently having different geometrical shapes), each joining-kit according to the present invention is composed by two identical joining-elements 1, 1'. This eliminates the wearisome operation of sorting out and selecting the correct male/female elements during installation.

Also advantageous effects are implied from the point of view of the manufacture, sorting and storage-procedures, owing to the single shape joining-element 1 to be handled.

Furthermore, a single mould is sufficient for die-casting only one geometrical shape of the joining-element, thus simplifying and making the production-procedures cheaper.

Advantageously, the connection quickness and easiness provided by the joining-element 1 also facilitates and speeds up the repair or maintenance operations which may require to disjoin the switchgear-frames. Since the joining-elements 1 do not require to access within the switchgear-compartment, it is also possible, in some circumstances, to mechanically join/disjoin the frames without deactivating the distribution switchgears.

The joining-element 1 is susceptible of modifications or variations all within the scope of the inventive concept as defined by the appended claims, and any details may be replaced with technically equivalent elements.

In particular, the shape, position and dimensions of any part of the joining-element 1 can be configured differently from what above described, according to specific needs or particular geometrical configurations of the profile rods 6.

## Claims

1. Joining-element (1) for mechanically joining switchgear-frames (2, 3) to one other, comprising
- a coupling-base-part (4) having a resting-surface (5) suitable for resting on, and coupling with a profile-rod (6) of a first switchgear-frame (2),
- a locking-mating-part (7) protruding from said coupling-base-part (4) and configured for mating with a further locking-mating-part (1') of a further joining-element connectable to a respective profile-rod (6') of a second switchgear-frame (3),
- said locking-mating-part (7) having a through-opening (8) extending along an insertion-axis (9) and suitable for cooperating with a further through-opening of said further locking-mating-part for receiving a locking-pin-element (10) parallely to longitudinal-axes (11) of said profile-rods (6, 6') to reciprocally lock said locking-mating-part (7) and said further locking-mating-part,
**CHARACTERIZED IN THAT** said locking-mating-part (7) comprises a first aligning-surface-portion (12, 23) tilted with respect to said insertion-axis (9) and configured for enabling, upon a reciprocal approaching-movement of said joining-element (1) and said further joining-element, achievement of a mutual alignment position of said switchgear-frames (2, 3) according to a first direction (F1) parallel to said longitudinal axes (11), and achievement of a desired relative side position according to a second direction (F2) orthogonal to said longitudinal axes (11) and to said resting-surface (5), on said locking-mating-part (7) and coupling-base-part (4) there being included a second aligning-surface-portion (13, 14) parallel to said insertion-axis (9), sloping relative to said resting-surface (5), and configured for ensuring a reciprocal alignment of said switchgear-frames (2, 3) according to a third direction (F3) orthogonal to said insertion-axis (9) and parallel to said resting-surface (5).

2. Joining-element (1) according to claim 1, wherein said coupling-base-part (4) comprises coupling-protrusion-means (15, 16, 17) protruding from said resting-surface (5) and configured for engaging with openings (18, 19, 20) of said profile-rod (6) so as to achieve a self-standing position for said joining-element (1) and to firmly secure said joining-element (1) to said switchgear-frame (2).

3. Joining-element (1) according to claim 2, wherein said coupling-protrusion-means comprise two spaced locking-pins (15, 16) suitable for engaging with securing-openings (18, 19) obtained on a side-wall (21) of said profile-rod (6), said coupling-protrusion-means further comprising a pre-positioning-center-pin (17) extending along a positioning-axis (22) between said locking-pins (15, 16) and suitable for pivotally engaging with a holding-opening (20) which is provided on said side-wall (21) between said securing-openings (18, 19), said spaced locking-pins (15, 16) having cut-out-zones (25, 26) for hooking on edge-zones of said securing-openings (18, 19) and for embracing the thickness of said side-wall (21) so as to restrain said coupling-base-part (4) on said profile-rod (6).

4. Joining-element (1) according to claim 3, wherein said cut-out-zones (25, 26) are oriented according to respective opposite directions transversely arranged to said positioning-axis (22), so that, upon a locking-rotation of said coupling-base-part (4) around said positioning-axis (22), said cut-out-zones (25, 26) engage simultaneously each with a corresponding edge-zone for blocking said coupling-base-part (4) on said profile-rod (6), and wherein a blind pilot hole (60) or a centering-notch (60), having substantially the same diameter as said pre-positioning-center-pin (17), is obtained on a side of said coupling-base-part (4) opposite said resting-surface (5), in a position axially aligned to said pre-positioning-center-pin (17).

5. Joining-element (1) according to claim 3 or 4, wherein the axes of said locking-pins (15, 16) and said positioning-axis (22) are mutually parallel and lie on a common plane (P), said cut-out-zones (25, 26) being placed so as to face opposite sides with respect to said common plane (P).

6. Joining-element (1) according to claim 5, wherein said common plane (P) is orthogonal to said resting-surface (5) and tilted with respect to said insertion-axis (9), and wherein said coupling-base-part (4) comprises a front side-edge (27) intended to be arranged, facing the outside of said switchgear-frame (2), near and parallel to a more external corner (28) of said profile-rod (6), said coupling-base-part (4) further comprising a rear side-edge (29, 30) opposite to said front side-edge (27), intended to abut on, or to be closely arranged to a stepped-surface (31) of said profile-rod (6), said rear side-edge having a first trait (29), parallel to said front-side-edge (27), and a second trait (30) which is tilted with respect to said first trait (29) and is parallel arranged to said common-plane (P) in order to avoid a mechanical-interference with, and enabling mounting of said coupling-base part (4) on said profile-rod (6).

7. Joining-element (1) according to claim 6, wherein said coupling-base-part (4) is so shaped, and said coupling-protrusion-means (15, 16, 17) are so arranged, as to provide for said joining-element (1) an univocal error-free mounting configuration which enables said joining-element (1) to be mounted on the chosen side-wall (21) of the respective profile-rod (6) only in one given spatial orientation relative to said profile-rod (6).

8. Joining-element (1) according to any one of the preceding claims, wherein said locking-mating-part (7) protrudes from a peripheral side zone (32) of said coupling-base-part (4) so as to result, in an operative mounting position on said profile-rod (6), placed more externally than said coupling-base-part (4).

9. Joining-element (1) according to any one of the preceding claims, and being configured with such a shape as to be able, in use, to mate with said further joining-element (1') in a complementary manner, said joining-element (1) and said further joining-element (1') mutually fitting in a mutual compact geometrical configuration for closely joining said switchgear-frames (2, 3).

10. Joining-element (1) according to any one of the preceding claims, wherein said coupling-base-part (4) and said locking-mating-part (7) are configured so that, in use, said joining-element (1) mates with a further joining-element (1') rotated, with respect to said joining-element (1), by 180° about an horizontal axis and by 180° about a vertical axis, said locking-mating-part (7a) aligning with the further locking-mating-part (7b) along said insertion-axis (9), and said coupling-base-part (4a) facing and being matched against the further coupling-base-part (4b).

11. Joining-element (1) according to any one of the preceding claims, wherein said coupling-base-part (4) comprises a thinner-portion (35), extending from a first end zone (33) to near a middle zone (34) of said coupling-base-part (4), and a thicker-portion (36) extending from said middle zone (34) to a second end zone (37) opposite to said first end zone (33), said thinner-portion (35) and said thicker-portion (36) defining, at an opposite side with respect to said resting-surface (5), a dip-zone and a rise-zone, shaped for matching with a further rise-zone and further dip-zone respectively of said further joining-element (1').

12. Joining-element (1) according to claim 11, wherein said locking-mating-part (7) longitudinally extends from said first end zone (33) to near said middle zone (34) of said coupling-base-part (4) and alongside said thinner-portion (35) so as to be staggered with respect to a longitudinal median line of said coupling-base-part (4) for resulting, in use, externally placed relative to said coupling-base-part (4).

13. Joining-element (1) according to any one of the preceding claims, wherein said first aligning-surface-portion (12, 23) comprises an external slope-surface (12), for slidingly going into contact with said further locking-mating part (7b) of said further joining-element (1'), and a flare-inviting-surface (23) for promoting insertion of said locking-pin-element (10) within said through-opening (8) and finely adjusting the relative position of the joining-elements (1, 1') along said second direction (F2).

14. Joining-element (1) according to any one of the preceding claims, wherein said external slope-surface (12) has an inclination such that a vector (V) starting orthogonally from said external slope-surface (12) points an opposite side with respect to said resting-surface (5), and wherein said flare-inviting-surface (23) starts from said external slope-surface (12) and extends inside said locking-mating-part (7) for defining at an end of said through-opening (8) an enlarged-flared-part for guiding and facilitating insertion of said locking-pin-element (10).

15. Joining-element (1) according to claim 14, wherein said external slope-surface (12) is subdivided into a lower surface-zone (50) and a higher surface-zone (51) which are joined by a ramp-fillet (52), said lower surface-zone (50) being farther from said resting-surface (5) than said higher surface-zone (51), said lower surface-zone (50) and said higher surface-zone (51) lying on respective planes which are mutually parallel and spaced from one other, said lower (50) and higher (51) surfaces-zones being adapted for avoiding seizure between the mutually approaching locking-mating-parts (7a, 7b) and ensuring a closer positioning and precise contact of said joining-element (1) with the further joining-element (1').

16. Joining-element (1) according to any one of the preceding claims, wherein said second aligning-surface-portion comprises a first deviating surface (13) provided on said locking-mating-part (7) on a side thereof intended, in use, to face said second switchgear-frame (3), said first deviating surface (13) merging with said coupling-base-part (4) according to an obtuse angle, and wherein said second aligning-surface-portion comprises a second deviating surface (14) provided along an longitudinal edge-zone of said coupling-base-part (4) at the same side as said locking-mating-part (7), said first deviating surface (13) being adapted for slidingly contacting a second deviating surface (14) of said further joining-element (1') and vice-versa.

17. Joining-element (1) according to any one of the preceding claims, further comprising longitudinal retaining-ribs (40) distributed along an internal surface (39) delimiting said through-opening (8), said longitudinal retaining-ribs (40) protruding for contacting through mechanical interference said locking-pin-element (10) in order to firmly hold it and prevent any backlash.

18. Joining-element (1) according to any one of the preceding claims, wherein said coupling-base-part (4) and said locking-mating-part (7) are integral with one other so as to define a single-piece-block-element which is obtained by metal pressure die casting process.

19. Kit comprising a pair of joining-elements (1, 1') according to any one of the preceding claims, suitable to be connected on respective switchgear-frames (2; 3) for mutually matching in a coupling-configuration (70) according to respective spatial-orientations which are mutually turned over by 180° around a vertical axis and by 180° around a horizontal axis, the kit further comprising a cylindrical oblong locking-pin-element (10) for being inserted in the axially aligned through-openings (8a, 8b) of said joining-elements (1, 1') in said coupling-configuration (70).

20. A switchgear comprising a frame (2, 3) and **characterized in that** it comprises at least one joining-element (1) according to one or more of claims 1-18.

## Patentansprüche

1. Verbindungselement (1), um Schaltgeräterahmen (2, 3) mechanisch miteinander zu verbinden, aufweisend:
- ein Kopplungsbasisteil (4), das eine Auflagefläche (5) aufweist, die dazu geeignet ist, eine Profilstange (6) eines ersten Schaltgeräterahmens (2) darauf aufzulegen und mit ihr verbunden zu werden,
- ein Verriegelungseinpassteil (7), das aus dem Kopplungsbasisteil (4) herausragt und so konfiguriert ist, dass es mit einem weiteren Verriegelungseinpassteil (1') eines weiteren Verbindungselements, das mit einer entsprechenden Profilstange (6') eines zweiten Schaltgeräterahmens (3) verbunden werden kann, zusammenpasst,
- wobei das Verriegelungseinpassteil (7) eine Durchgangsöffnung (8) aufweist, die entlang einer Einführachse (9) verläuft und dazu geeignet ist, mit einer weiteren Durchgangsöffnung des weiteren Verriegelungseinpassteils zusammenzuwirken, um ein Verriegelungsstiftelement (10) parallel zu den Längsachsen (11) der Profilstangen (6, 6') aufzunehmen, um das Verriegelungseinpassteil (7) und das weitere Verriegelungseinpassteil gegenseitig zu verriegeln,
**dadurch gekennzeichnet, dass** das Verriegelungseinpassteil (7) einen ersten Ausrichtungsflächenabschnitt (12, 23) aufweist, der in Bezug auf die Einführachse (9) geneigt ist und so konfiguriert ist, dass er bei einer gegenseitigen Annäherungsbewegung des Verbindungselements (1) und des weiteren Verbindungselements ein Erreichen einer gegenseitigen Ausrichtungsposition der Schaltgeräterahmen (2, 3) gemäß einer ersten Richtung (F1), die parallel zu der Längsachse (11) ist, ermöglicht, und ein Erreichen einer gewünschten relativen Seitenposition gemäß einer zweiten Richtung (F2), die rechtwinklig zu den Längsachsen (11) und zu der Auflagefläche (5) ist, ermöglicht, und wobei auf dem Verriegelungseinpassteil (7) und dem Kopplungsbasisteil (4) ein zweiter Ausrichtungsflächenabschnitt (13, 14) vorhanden ist, der zu der Einführachse (9) parallel ist und sich in Bezug auf die Auflagefläche (5) abschrägt, und der so konfiguriert ist, dass er eine gegenseitige Ausrichtung der Schaltgeräterahmen (2, 3) gemäß einer dritten Richtung (F3) garantiert, die zu der Einführachse (9) rechtwinklig ist und zu der Auflagefläche (5) parallel ist.

2. Verbindungselement (1) nach Anspruch 1, wobei das Kopplungsbasisteil (4) eine Kopplungsvorsprungseinrichtung (15, 16, 17) aufweist, die aus der Auflageoberfläche (5) herausragt und so konfiguriert ist, dass sie mit Öffnungen (18, 19, 20) der Profilstange (6) ineinandergreift, so dass eine selbststehende Position für das Verbindungselement (1) erreicht wird und das Verbindungselement (1) fest mit dem Schaltgeräterahmen (2) verbunden wird.

3. Verbindungselement (1) nach Anspruch 2, wobei die Kopplungsvorsprungseinrichtung zwei beabstandete Verriegelungsstifte (15, 16) aufweist, die geeignet sind, mit Befestigungsöffnungen (18, 19) ineinanderzugreifen, die sich an einer Seitenwand (21) der Profilstange (6) befinden, wobei die Kopplungsvorsprungseinrichtung ferner einen Präpositionierungszentralstift (17) aufweist, der entlang einer Positionierachse (22) zwischen den Verriegelungsstiften (15, 16) verläuft und geeignet ist, schwenkbar mit einer Halteöffnung (20) ineinanderzugreifen, die sich auf der Seitenwand (21) zwischen den Befestigungsöffnungen (18, 19) befindet, wobei die beabstandeten Verriegelungsstifte (15, 16) ausgeschnittene Zonen (25, 26) zum Festhaken an Kantenzonen der Befestigungsöffnungen (18, 19) und zum Umfassen der Dicke der Seitenwand (21) aufweisen, so dass das Kopplungsbasisteil (4) an der Profilstange (6) festgehalten wird.

4. Verbindungselement (1) nach Anspruch 3, wobei die ausgeschnittenen Zonen (25, 26) gemäß entsprechenden gegenüberliegenden Richtungen ausgerichtet sind, die quer zu der Positionierachse (22) angeordnet sind, so dass bei einer Verriegelungsdrehung des Kopplungsbasisteils (4) um die Positionierachse (22), die ausgeschnittenen Zonen (25, 26) jeweils gleichzeitig mit einer entsprechenden Kantenzone ineinandergreifen, um das Kopplungsbasisteil (4) an der Profilstange (6) zu blockieren, und wobei ein Blindpilotloch (60) oder eine Zentrierkerbe (60), die im Wesentlichen denselben Durchmesser haben wie der Präpositionierzentralstift (17), auf einer Seite des Kopplungsbasisteils (4) gegenüber der Auflagefläche (5) an einer Position angeordnet sind, die axial zu dem Präpositionierzentralstift (17) ausgerichtet ist.

5. Verbindungselement (1) nach Anspruch 3 oder 4, wobei die Achsen der Verriegelungsstifte (15, 16) und die Positionierachse (22) zueinander parallel sind und auf einer gemeinsamen Ebene (P) liegen, wobei die ausgeschnittenen Zonen (25, 26) so platziert sind, dass sie gegenüberliegenden Seiten in Bezug auf die gemeinsame Ebene (P) zugewandt sind.

6. Verbindungselement (1) nach Anspruch 5, wobei die gemeinsame Ebene (P) zu der Auflagefläche (5) rechtwinklig ist und in Bezug auf die Einführachse (9) geneigt ist, und wobei das Kopplungsbasisteil (4) eine Vorderseitenkante (27) aufweist, die so angeordnet werden soll, dass sie dem Äußeren des Schaltgeräterahmens (2) zugewandt ist und einer weiter außen gelegenen Ecke (28) der Profilstange (6) näher und parallel zu dieser ist, wobei das Kopplungsbasisteil (4) ferner eine Hinterseitenkante (29, 30) aufweist, die der Vorderseitenkante (27) gegenüberliegt, und an einer gestuften Fläche (31) der Profilstange (6) anstoßen soll oder in ihrer Nähe angeordnet ist, wobei die Hinterseitenkante einen ersten Zug (29) hat, der parallel zu der Vorderseitenkante (27) ist, und einen zweiten Zug (30) hat, der in Bezug auf den ersten Zug (29) geneigt ist und parallel zu der gemeinsamen Ebene (P) angeordnet ist, um ein mechanisches Zusammenwirken des Kopplungsbasisteils (4) zu vermeiden und ein Befestigen desselben an der Profilstange (6) zu ermöglichen.

7. Verbindungselement (1) nach Anspruch 6, wobei das Kopplungsbasisteil (4) so geformt ist, und die Kopplungsvorsprungseinrichtung (15, 16, 17) so angeordnet ist, dass das Verbindungselement (1) eine eindeutig störungsfreie Befestigungskonfiguration aufweist, die es dem Verbindungselement (1) ermöglicht, an der gewählten Seitenwand (21) der entsprechenden Profilstange (6) nur in einer bestimmten räumlichen Orientierung in Bezug auf die Profilstange (6) montiert zu werden.

8. Verbindungselement (1) nach einem der vorgenannten Ansprüche, wobei das Verriegelungseinpassteil (7) von einer peripheren Seitenzone (32) des Kopplungsbasisteils (4) aus hervorragt, um in einer operativen Befestigungsposition an der Profilstange (6) zu resultieren, die weiter außen platziert ist als das Kopplungsbasisteil (4).

9. Verbindungselement (1) nach einem der vorgenannten Ansprüche, das so konfiguriert ist, dass es eine solche Form aufweist, dass es in der Lage ist, während der Verwendung mit dem weiteren Verbindungselement (1') auf komplementäre Weise zusammenzupassen, wobei das Verbindungselement (1) und das weitere Verbindungselement (1') in einer gegenseitigen kompakten geometrischen Konfiguration miteinander zusammenzupassen, um die Schaltgeräterahmen (2, 3) passgenau zu verbinden.

10. Verbindungselement (1) nach einem der vorgenannten Ansprüche, wobei das Kopplungsbasisteil (4) und das Verriegelungseinpassteil (7) so konfiguriert sind, dass während der Verwendung das Verbindungselement (1) mit einem weiteren Verbindungselement (1'), das in Bezug auf das Verbindungselement (1) um 180° um eine horizontale Achse und um 180° um eine vertikale Achse gedreht wird, zusammenpasst, wobei das Verriegelungseinpassteil (7a) entlang der Einführachse (9) auf das weitere Verriegelungseinpassteil (7b) ausgerichtet ist und das Kopplungsbasisteil (4a) dem weiteren Kopplungsbasisteil (4b) zugewandt ist und damit zusammenpasst.

11. Verbindungselement (1) nach einem der vorgenannten Ansprüche, wobei das Kopplungsbasisteil (4) einen Verdünnungsabschnitt (35), der von einer ersten Endzone (33) in die Nähe einer Mittelzone (34) des Kopplungsbasisteils (4) verläuft, und einen Verdickungsabschnitt (36), der von der Mittelzone (34) zu einer zweiten Endzone (37), die der ersten Endzone (33) gegenüberliegt, verläuft, aufweist, wobei der Verdünnungsabschnitt (35) und der Verdickungsabschnitt (36) an einer gegenüberliegenden Seite in Bezug auf die Auflagefläche (5) eine Absenkzone und eine Anstiegszone definieren, die so geformt sind, dass sie jeweils mit einer weiteren Anstiegszone und einer weiteren Absenkzone des weiteren Verbindungselements (1') übereinstimmen.

12. Verbindungselement (1) nach Anspruch 11, wobei das Verriegelungseinpassteil (7) der Länge nach von der ersten Endzone (33) in die Nähe der Mittelzone (34) des Kopplungsbasisteils (4) und entlang des Verdünnungsabschnitts (35) verläuft, so dass es in Bezug auf eine Medianlängslinie des Kopplungsbasisteils (4) abgestuft ist, so dass es während der Verwendung in Bezug auf das Kopplungsbasisteil (4) außen platziert ist.

13. Verbindungselement (1) nach einem der vorgenannten Ansprüche, wobei der erste Ausrichtungsflächenabschnitt (12, 23) eine äußere Neigungsfläche (12), um gleitenden Kontakt mit dem weiteren Verriegelungseinpassteil (7b) des weiteren Verbindungselements (1') herzustellen, und eine Lichtreflexanziehungsfläche (23) zum Erleichtern des Einführens des Verriegelungsstiftelements (10) in die Durchgangsöffnung (8) und zur Feineinstellung der relativen Position des Verbindungselements (1, 1') entlang der zweiten Richtung (F2) aufweist.

14. Verbindungselement (1) nach einem der vorgenannten Ansprüche, wobei die äußere Neigungsfläche (12) eine Neigung aufweist, die dergestalt beschaffen ist, dass ein Vektor (V), der rechtwinklig von der äußeren Neigungsfläche (12) aus beginnt, in eine in Bezug auf die Auflagefläche (5) gegenüberliegende Seite zeigt, und wobei die Lichtreflexanziehungsfläche (23) von der äußeren Neigungsfläche (12) aus beginnt und in dem Verriegelungseinpassteil (7) verläuft, um an einem Ende der Durchgangsöffnung (8) einen vergrößerten Lichtreflexteil zum Führen und Erleichtern des Einführens des Verriegelungsstiftelements (10) zu definieren.

15. Verbindungselement (1) nach Anspruch 14, wobei die äußere Neigungsfläche (12) in eine untere Flächenzone (50) und eine höhere Flächenzone (51) unterteilt ist, die durch einen Rampensteg (52) verbunden sind, wobei die untere Flächenzone (50) weiter von der Auflagefläche (5) entfernt ist als die höhere Flächenzone (51), wobei die untere Flächenzone (50) und die höhere Flächenzone (51) auf entsprechenden Ebenen liegen, die zueinander parallel sind und voneinander beabstandet sind, wobei die unteren (50) und höheren (51) Flächenzonen darauf ausgelegt sind, ein Festfressen zwischen den sich aufeinander zubewegenden Verriegelungseinpassteilen (7a, 7b) zu vermeiden und ein näheres Positionieren und präzises Berühren des Verbindungselements (1) und des weiteren Verbindungselements (1') sicherzustellen.

16. Verbindungselement (1) nach einem der vorgenannten Ansprüche, wobei der zweite Ausrichtungsflächenabschnitt eine erste Abweichungsfläche (13) aufweist, die sich an dem Verriegelungseinpassteil (7) an einer Seite desselben befindet und während der Verwendung dazu dient, dem zweiten Schaltgeräterahmen (3) zugewandt zu sein, wobei sich die erste Abweichungsfläche (13) mit dem Kopplungsbasisteil (4) in einem stumpfen Winkel vereint, und wobei der zweite Ausrichtungsflächenabschnitt eine zweite Abweichungsfläche (14) aufweist, die sich entlang einer Längskantenzone des Kopplungsbasisteils (4) an derselben Seite wie das Verriegelungseinpassteil (7) befindet, wobei die erste Abweichungsfläche (13) darauf ausgelegt ist, gleitenden Kontakt mit einer zweiten Abweichungsfläche (14) des weiteren Verbindungselements (1') herzustellen, und umgekehrt.

17. Verbindungselement (1) nach einem der vorgenannten Ansprüche, ferner aufweisend Längshalterippen (40), die entlang einer Innenfläche (39) verteilt sind, die die Durchgangsöffnung (8) abgrenzt, wobei die Längshalterippen (40) hervorstehen, um durch mechanisches Zusammenwirken das Verriegelungsstiftelement (10) zu berühren, um es fest zu halten und jedes Rückschlagen zu verhindern.

18. Verbindungselement (1) nach einem der vorgenannten Ansprüche, wobei das Kopplungsbasisteil (4) und das Verriegelungseinpassteil (7) miteinander einstückig sind, so dass sie ein einstückiges Blockelement definieren, das durch einen Metalldruckgießvorgang erhalten wird.

19. Kit, aufweisend ein Paar Verbindungselemente (1, 1') nach einem der vorgenannten Ansprüche, geeignet, mit entsprechenden Schaltgeräterahmen (2; 3) verbunden zu werden, so dass sie gegenseitig in einer Kopplungskonfiguration (70) gemäß entsprechenden räumlichen Orientierungen zusammenpassen, die gegenseitig um 180° um eine vertikale Achse und um 180° um eine horizontale Achse gedreht sind, wobei das Kit ferner ein zylindrisches, längliches Verriegelungsstiftelement (10) aufweist, um in die axial ausgerichteten Durchgangsöffnungen (8a, 8b) der Verbindungselemente (1, 1') in der Kopplungskonfiguration (70) eingeführt zu werden.

20. Schaltgerät, aufweisend einen Rahmen (2, 3) und **dadurch gekennzeichnet, dass** es zumindest ein Verbindungselement (1) gemäß einem oder mehreren der Ansprüche 1 bis 18 aufweist.

## Revendications

1. Élément de liaison (1) pour relier mécaniquement des cadres d'appareillage de commutation (2, 3) l'un à l'autre, comprenant :
- une partie de base de couplage (4) ayant une surface de repos (5) appropriée pour reposer sur une barre profilée (6) d'un premier cadre d'appareillage de commutation (2) et pour se coupler à celle-ci,
- une partie d'accouplement de blocage (7) faisant saillie à partir de ladite partie de base de couplage (4) et configurée pour s'accoupler avec une partie d'accouplement de blocage (1') supplémentaire d'un élément de liaison supplémentaire pouvant être raccordé à une barre profilée (6') respective d'un deuxième cadre d'appareillage de commutation (3),
- ladite partie d'accouplement de blocage (7) ayant une ouverture traversante (8) s'étendant le long d'un axe d'insertion (9) et appropriée pour coopérer avec une ouverture traversante supplémentaire de ladite partie d'accouplement de blocage supplémentaire afin de recevoir un élément de goupille de blocage (10) parallèle aux axes longitudinaux (11) desdites barres profilées (6, 6') pour bloquer de manière réciproque ladite partie d'accouplement de blocage (7) et ladite partie d'accouplement de blocage supplémentaire,
**CARACTÉRISÉ EN CE QUE** ladite partie d'accouplement de blocage (7) comprend une première partie de surface d'alignement (12, 23) inclinée par rapport audit axe d'insertion (9) et configurée pour permettre, lors d'un mouvement de rapprochement réciproque dudit élément de liaison (1) et dudit élément de liaison supplémentaire, l'obtention d'une position d'alignement mutuel desdits cadres d'appareillage de commutation (2, 3) selon une première direction (F1) parallèle auxdits axes longitudinaux (11) et l'obtention d'une position latérale relative souhaitée selon une deuxième direction (F2) orthogonale auxdits axes longitudinaux (11) et à ladite surface de repos (5), sur ladite partie d'accouplement de blocage (7) et ladite partie de base de couplage (4) étant incluse une deuxième partie de surface d'alignement (13, 14) parallèle audit axe d'insertion (9), en pente par rapport à ladite surface de repos (5), et configurée pour assurer un alignement réciproque desdits cadres d'appareillage de commutation (2, 3) selon une troisième direction (F3) orthogonale audit axe d'insertion (9) et parallèle à ladite surface de repos (5).

2. Élément de liaison (1) selon la revendication 1, dans lequel ladite partie de base de couplage (4) comprend des moyens saillants de couplage (15, 16, 17) faisant saillie à partir de ladite surface de repos (5) et configurés pour s'engager avec des ouvertures (18, 19, 20) de ladite barre profilée (6) de manière à obtenir une position autoportante pour ledit élément de liaison (1) et pour fixer fermement ledit élément de liaison (1) audit cadre d'appareillage de commutation (2).

3. Élément de liaison (1) selon la revendication 2, dans lequel lesdits moyens saillants de couplage comprennent deux goupilles de blocage (15, 16) espacées appropriées pour s'engager avec des ouvertures de fixation (18, 19) obtenues sur une paroi latérale (21) de ladite barre profilée (6), lesdits moyens saillants de couplage comprenant en outre une goupille centrale de pré-positionnement (17) s'étendant le long d'un axe de positionnement (22) entre lesdites goupilles de blocage (15, 16) et appropriée pour s'engager en pivotement avec une ouverture de maintien (20) qui est prévue sur ladite paroi latérale (21) entre lesdites ouvertures de fixation (18, 19), lesdites goupilles de blocage (15, 16) espacées ayant des zones de découpe (25, 26) pour s'accrocher sur des zones de bord desdites ouvertures de fixation (18, 19) et pour adopter l'épaisseur de ladite paroi latérale (21) de manière à retenir ladite partie de base de couplage (4) sur ladite barre profilée (6).

4. Élément de liaison (1) selon la revendication 3, dans lequel lesdites zones de découpe (25, 26) sont orientées selon des directions opposées respectives agencées transversalement sur ledit axe de positionnement (22), de sorte que lors d'une rotation de blocage de ladite partie de base de couplage (4) autour dudit axe de positionnement (22), lesdites zones de découpe (25, 26) s'engagent simultanément chacune avec une zone de bord correspondante pour bloquer ladite partie de base de couplage (4) sur ladite barre profilée (6), et où un trou borgne avant (60) ou une entaille de centrage (60) ayant essentiellement le même diamètre que ladite goupille centrale de pré-positionnement (17) est obtenu sur un côté de ladite partie de base de couplage (4) opposée à ladite surface de repos (5) dans une position alignée axialement à ladite goupille centrale de pré-positionnement (17).

5. Élément de liaison (1) selon la revendication 3 ou 4, dans lequel les axes desdites goupilles de blocage (15, 16) et ledit axe de positionnement (22) sont mutuellement parallèles et se trouvent sur un plan commun (P), lesdites zones de découpe (25, 26) étant placées de manière à faire face à des côtés opposés par rapport audit plan commun (P).

6. Élément de liaison (1) selon la revendication 5, dans lequel ledit plan commun (P) est orthogonal à ladite surface de repos (5) et incliné par rapport audit axe d'insertion (9) et dans lequel ladite partie de base de couplage (4) comprend un bord latéral avant (27) destiné à être agencé, tourné vers l'extérieur dudit cadre d'appareillage de commutation (2), près de et parallèle à un coin plus à l'extérieur (28) de ladite barre profilée (6), ladite partie de base de couplage (4) comprenant en outre un bord latéral arrière (29, 30) opposé audit bord latéral avant (27), destiné à venir en butée contre une surface étagée (31) de ladite barre profilée (6), ou à être étroitement agencé sur celle-ci, ledit bord latéral arrière ayant un premier élément (29), parallèle audit bord latéral avant (27) et un deuxième élément (30) qui est incliné par rapport audit premier élément (29) et est agencé parallèlement audit plan commun (P) afin d'éviter une interférence mécanique et permettre le montage de ladite partie de base de couplage (4) sur ladite barre profilée (6).

7. Élément de liaison (1) selon la revendication 6, dans lequel ladite partie de base de couplage (4) est conformée, et lesdits moyens saillants de couplage (15, 16, 17) sont agencés de manière à fournir audit élément de liaison (1) une configuration de montage sans erreur univoque qui permet à l'élément de liaison (1) d'être monté sur la paroi latérale choisie (21) de la barre profilée respective (6) uniquement dans une seule orientation spatiale donnée par rapport à ladite barre profilée (6).

8. Élément de liaison (1) selon l'une quelconque des revendications précédentes, dans lequel ladite partie d'accouplement de blocage (7) fait saillie à partir d'une zone latérale périphérique (32) de ladite partie de base de couplage (4) de manière à être, par conséquence, placée plus à l'extérieur que ladite partie de base de couplage (4), dans une position de montage fonctionnelle sur ladite barre profilée (6).

9. Élément de liaison (1) selon l'une quelconque des revendications précédentes, et présentant une forme permettant, en cours d'utilisation, de s'accoupler avec ledit élément de liaison (1') supplémentaire de manière complémentaire, ledit élément de liaison (1) et ledit élément de liaison (1') supplémentaire s'ajustant mutuellement selon une configuration géométrique compacte mutuelle pour relier étroitement lesdits cadres d'appareillage de commutation (2, 3).

10. Élément de liaison (1) selon l'une quelconque des revendications précédentes, dans lequel ladite partie de base de couplage (4) et ladite partie d'accouplement de blocage (7) sont configurées de sorte que, en cours d'utilisation, ledit élément de liaison (1) s'accouple avec un élément de liaison (1') supplémentaire tourné, par rapport audit élément de liaison (1), de 180° autour d'un axe horizontal et de 180° autour d'un axe vertical, ladite partie d'accouplement de blocage (7a) s'alignant avec la partie d'accouplement de blocage (7b) supplémentaire le long dudit axe d'insertion (9), et ladite partie de base de couplage (4a) faisant face à la partie de base de couplage (4b) supplémentaire et mise en correspondance avec celle-ci.

11. Élément de liaison (1) selon l'une quelconque des revendications précédentes, dans lequel ladite partie de base de couplage (4) comprend une partie plus mince (35) s'étendant d'une première zone d'extrémité (33) jusqu'à la proximité d'une zone intermédiaire (34) de ladite partie de base de couplage (4), et une partie plus épaisse (36) s'étendant de ladite zone intermédiaire (34) jusqu'une deuxième zone d'extrémité (37) opposée à ladite première zone d'extrémité (33), ladite partie plus mince (35) et ladite partie plus épaisse (36) définissant, au niveau d'un côté opposé par rapport à ladite surface de repos (5), une zone descendante et une zone montante, conformées pour être mises en correspondance avec une zone montante supplémentaire et une zone descendante supplémentaire respectivement dudit élément de liaison supplémentaire (1').

12. Élément de liaison (1) selon la revendication 11, dans lequel ladite partie d'accouplement de blocage (7) s'étend longitudinalement de ladite première zone d'extrémité (33) jusqu'à la proximité de ladite zone intermédiaire (34) de ladite partie de base de couplage (4) et à côté de ladite partie plus mince (35) de manière à être décalée par rapport à une ligne médiane longitudinale de ladite partie de base de couplage (4) pour être, par conséquence et en cours d'utilisation, placée à l'extérieur par rapport à ladite partie de base de couplage (4).

13. Élément de liaison (1) selon l'une quelconque des revendications précédentes, dans lequel ladite première partie de surface d'alignement (12, 23) comprend une surface en pente externe (12), pour entrer en contact par glissement avec ladite partie d'accouplement de blocage (7b) supplémentaire dudit élément de liaison (1') supplémentaire, et une surface permettant un évasement (23) pour favoriser l'insertion dudit élément de goupille de blocage (10) à l'intérieur de ladite ouverture traversante (8) et ajuster finement la position relative des éléments de liaison (1, 1') le long de ladite deuxième direction (F2).

14. Élément de liaison (1) selon l'une quelconque des revendications précédentes, dans lequel ladite surface en pente externe (12) a une inclinaison telle qu'un vecteur (V) partant orthogonalement de ladite surface en pente externe (12) pointe un côté opposé par rapport à ladite surface de repos (5), et dans lequel ladite surface permettant un évasement (23) commence de ladite surface en pente externe (12) et s'étend à l'intérieur de ladite partie d'accouplement de blocage (7) pour définir au niveau d'une extrémité de ladite ouverture traversante (8) une partie évasée, élargie afin de guider et faciliter l'insertion dudit élément de goupille de blocage (10).

15. Élément de liaison (1) selon la revendication 14, dans lequel ladite surface en pente externe (12) est subdivisée en une zone de surface inférieure (50) et une zone de surface supérieure (51) qui sont reliées par un congé arrondi (52), ladite zone de surface inférieure (50) étant plus éloignée de ladite surface de repos (5) que ladite zone de surface supérieure (51), ladite zone de surface inférieure (50) et ladite zone de surface supérieure (51) se trouvant sur des plans respectifs qui sont mutuellement parallèles et espacés l'un de l'autre, lesdites zones de surface inférieure (50) et supérieure (51) étant adaptées pour éviter un grippage entre les parties d'accouplement de blocage (7a, 7b) se rapprochant mutuellement et assurer un positionnement plus étroit et un contact précis dudit élément de liaison (1) avec élément de liaison (1') supplémentaire.

16. Élément de liaison (1) selon l'une quelconque des revendications précédentes, dans lequel ladite deuxième partie de surface d'alignement comprend une première surface de déviation (13) prévue sur ladite partie d'accouplement de blocage (7) sur un côté de celle-ci destinée, en cours d'utilisation, à faire face audit deuxième cadre d'appareillage de commutation (3), ladite première surface de déviation (13) fusionnant avec ladite partie de base de couplage (4) selon un angle obtus, et dans lequel ladite deuxième partie de surface d'alignement comprend une deuxième surface de déviation (14) prévue le long d'une zone de bord longitudinale de ladite partie de base de couplage (4) du même côté que ladite partie d'accouplement de blocage (7), ladite première surface de déviation (13) étant adaptée pour entrer en contact par glissement avec une deuxième surface de déviation (14) dudit élément de liaison (1') supplémentaire et vice versa.

17. Élément de liaison (1) selon l'une quelconque des revendications précédentes, comprenant en outre des nervures de retenue longitudinales (40) réparties le long d'une surface interne (39) délimitant ladite ouverture traversante (8), lesdites nervures de retenue longitudinales (40) faisant saillie pour entrer en contact, par interférence mécanique, avec ledit l'élément de goupille de blocage (10) afin de le maintenir fermement et éviter tout jeu.

18. Élément de liaison (1) selon l'une quelconque des revendications précédentes, dans lequel ladite partie de base de couplage (4) et ladite partie d'accouplement de blocage (7) sont d'un seul tenant de manière à définir un élément monobloc qui est obtenu par un procédé de coulée sous pression métallique.

19. Ensemble comprenant une paire d'éléments de liaison (1, 1') selon l'une quelconque des revendications précédentes, appropriés pour être raccordés à des cadres d'appareillage de commutation (2, 3) respectifs pour être mis en correspondance mutuellement dans une configuration de couplage (70) selon des orientations spatiales respectives qui sont tournées mutuellement de 180° autour d'un axe vertical et de 180° autour d'un axe horizontal, l'ensemble comprenant en outre un élément de goupille de blocage (10) cylindrique oblong à insérer dans les ouvertures traversantes alignées axialement (8a, 8b) desdits éléments de liaison (1, 1') dans ladite configuration de couplage (70).

20. Appareillage de commutation comprenant un cadre (2, 3) et **caractérisé en ce qu'**il comprend au moins un élément de liaison (1) selon l'une ou plusieurs des revendications 1 à 18.
